# EUROPEAN PATENT APPLICATION

(11) **EP 1 580 332 A2**
(43) Date of publication of application: **28.09.2005**
(21) Application number: 05102172.3
(22) Date of filing: 18.03.2005
(51) Int. Cl.: E02F 9/08

(54) **Construction machine**

(30) Priority: 22.03.2004 JP 2004083392
(71) Applicant: Komatsu Ltd, Tokyo 107-8414 (JP); KOMATSU ZENOAH CO., Saitama (JP)
(72) Inventor: Takano, Yoshiyuki, Kawagoe-City (JP); Shimizu, Kenichi, Kawagoe-City (JP); Endo, Takeshi, Kawagoe-City (JP); Kimura, Yasuharu, Kawagoe-City (JP)
(74) Representative: Selting, Günther

(57) **Abstract**

A construction machine (1) which comprises an undercarriage (2), an upper structure (3) rotatably mounted on a top of the undercarriage (2), and a work equipment (10) movably supported at a front of the upper structure, in which within a frame assembly (Ra) that forms a base of the upper structure, at least following components are produced by casting a weldable material: a work equipment support that supports the work equipment, a right vertical rib and a left vertical rib, a distance therebetween widening gradually as they extend backwards from the work equipment support, a bottom plate that extends towards inside, adjoining bottom edges of the work equipment support, the right vertical rib and the left vertical rib.

## Description

### BACKGROUND OF THE INVENTION

### 1. Field of the Invention

The present invention relates to a construction machine, and more particularly to a frame assembly that forms the base of an upper structure of a construction machine

### 2. Description of the Related Art

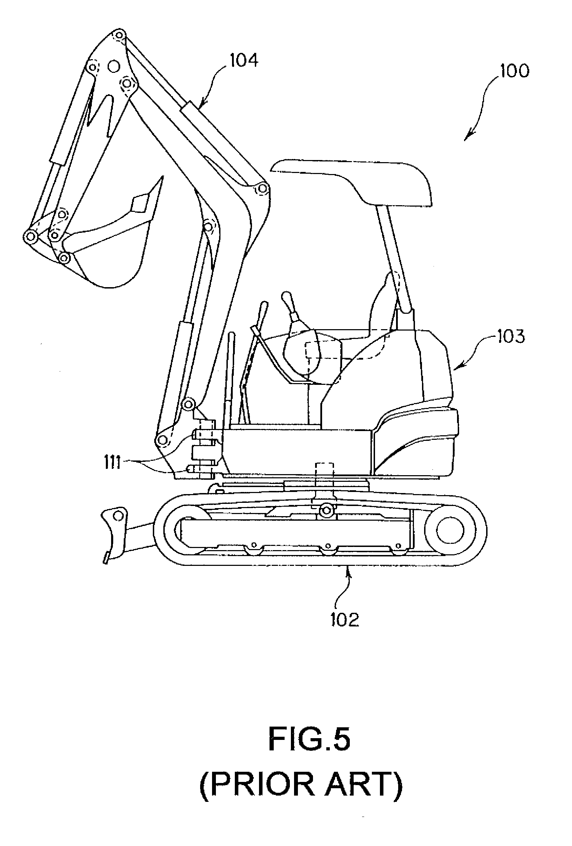

According to Japanese Patent Application Laid-open No 2002-146834, a backhoe 100 chiefly comprises a lower movernent device 102, an upper structure 103, and a excavation device 104 installed on the upper structure 103, as illustrated in Fig 5, which shows a right side view

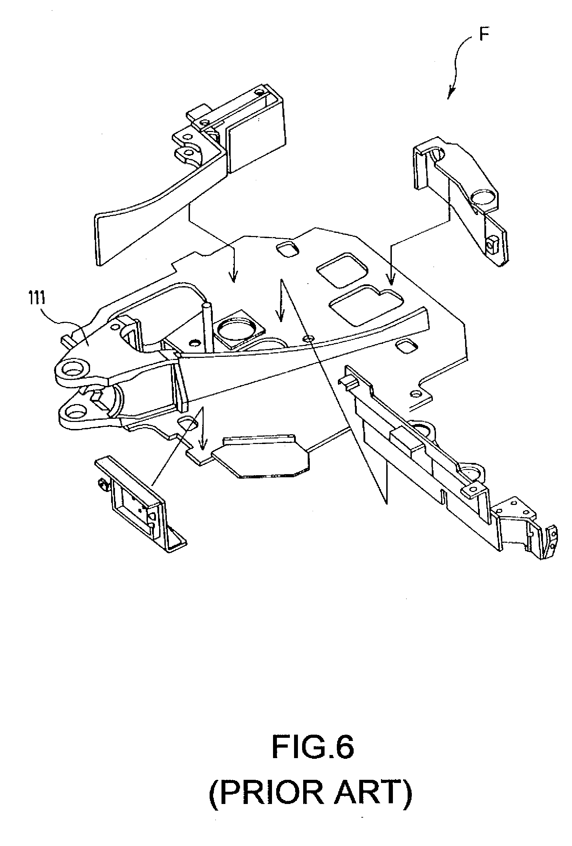

The revolving frame F that forms the base of the upper structure 103 and is provided at the bottom face thereof is equipped with a support III on which the excavation device 104 is supported on an axle in such a way as to be able to revolve in a horizontal direction, and is illustrated in Fig 6, which shows an exploded view

By the structure described above, operating the excavation device 104 of the backhoe 100 causes various loads to be applied to the revolving frame F that supports the excavation device 104, so that a certain strength is required

Because this revolving frame F needs to be of a certain size, it is constructed from sheet metal, as shown in Fig 6.

Revolving frames used in smaller-scale machines, however, are sometimes made from cast owing to their relatively smaller size, as for example in the turning frame described in Japanese Patent Application Laid-open No 2003-20683 (corresponding to the revolving frame of Japanese Patent Application Laid-open No 2002-146834) (not illustrated).

Although a revolving frame made from sheet metal according to Japanese Patent Application Laid-open No 2002-146834 has the advantage of making it possible to restrict any increase in weight by choosing steel plates of the optimum thickness for each part, however, the number of parts is large and there is a problem with high costs caused by the large amount of welding work required to join each of the constituent parts by welding

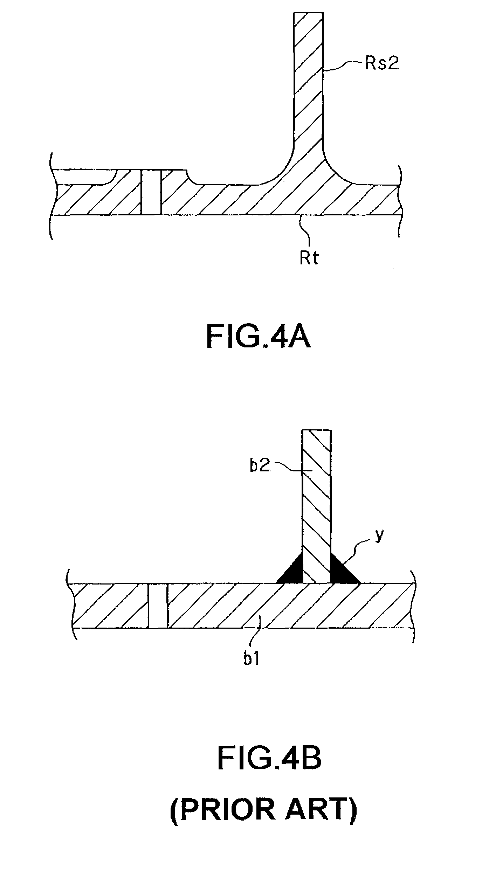

Also, as shown in Fig. 4B, which is a cross-section showing the connection between the parts b1 and b2, because the constituent parts abut one another, a sharp groove is formed in the adjoining parts This means that stress concentration can easily occur, and this makes it difficult to ensure sufficient strength

For this reason, in order to form smooth R portions at the connecting parts during joining, with the aim of preventing stress concentrations from occurring when the machine is in operation, it is necessary to carry out packing and grinding in addition to the joining by means of welding, causing extra burdens during the manufacturing process, and leading to an increase in the amount of work required

Making the revolving frame in a cast, on the other hand, has the advantage of offering greater freedom of shape, and decreasing the number of parts and the work involved in assembly However, this method presents disadvantages too If the cast is made too thin, this can cause problems with the smooth flowing of the casting material used and cavities can form, depending on the size of the parts, the material may cool before it has properly filled the mold, and yield is poor

For this reason, one problem associated with cast metal molds is an increase in weight, since these limitations of the manufacturing process make a certain thickness necessary, so that for example a thickness of 25mm is required where 10mm would otherwise be sufficient

With the foregoing in view, it is an object of the present invention to provide a construction machine offering improved reliability and decreased weight at the same time as bringing down costs and reducing the number of parts and the amount of assembly work required

### SUMMARY OF THE INVENTION

To achieve the above object, the construction machine according to Claim I of the present invention is a construction machine (I) which comprises: an undercarriage (2), an upper structure (3) rotatably mounted on a top of the undercarriage (2), and a work equipment (10) movably supported at a front of the upper structure (3), wherein within a frame assembly (Ra) that forms a base of the upper structure (3), at least the following components are produced by casting a weldable material; a work equipment support (Rb) that supports the work equipment (10); a right vertical rib (Rs1) and a left vertical rib (Rs2), a distance therebetween widening gradually as they extend backwards from the work equipment support; a bottom plate (Rt) that extends towards inside, adjoining bottom edges (Rb2, Rs11, Rs21) of the work equipment support (Rb), the right vertical rib (Rs1) and the left vertical rib (Rs2)

The construction machine relating to Claim 2 of the present invention is the construction machine according to Claim 1, wherein within the frame assembly (Ra), a rear vertical rib (Ru) that adjoins back edges of the right vertical rib (Rs1) and the left vertical rib (Rs2) is produced by casting together with the work equipment support (Rb), the right vertical rib (Rs1), the left vertical rib (Rs2) and the bottom plate (Rt)

The construction machine relating to Claim 3 of the present invention is the construction machine according to Claim 1, wherein the material used in the casting is cast steel

The construction machine relating to Claim 4 of the present invention is the construction machine according to Claim 2, wherein the material used in the casting is cast steel

According to the construction machine relating to Claim I of the present invention, by making the work equipment support, the right vertical rib, the left vertical rib, and the bottom plate of the frame assembly in a cast using a weldable material as described above, providing R portions inside groove, and making the structure thick in places likely to receive stress, it is possible to improve load capacity and strength and to improve the mechanical reliability

It is also possible to reduce the weight, by optimizing the shape and thickness

Furthermore, it is possible to bring down the cost of production, by reducing the number of parts and lessening the amount of welding work required

Consequently, it is possible to realize a highly reliable low-cost construction machine while nevertheless achieving a reduction in weight at the same time

According to the construction machine relating to Claim 2 of the present invention, a structure of even greater strength may be obtained by uniform molding the rear vertical rib in the cast

According to the construction machine relating to Claim 3 or 4 of the present invention, it is possible to achieve easy and low-cost production by using cast steel as the casting material

### BRIEF DESCRIPTION OF THE DRAWINGS

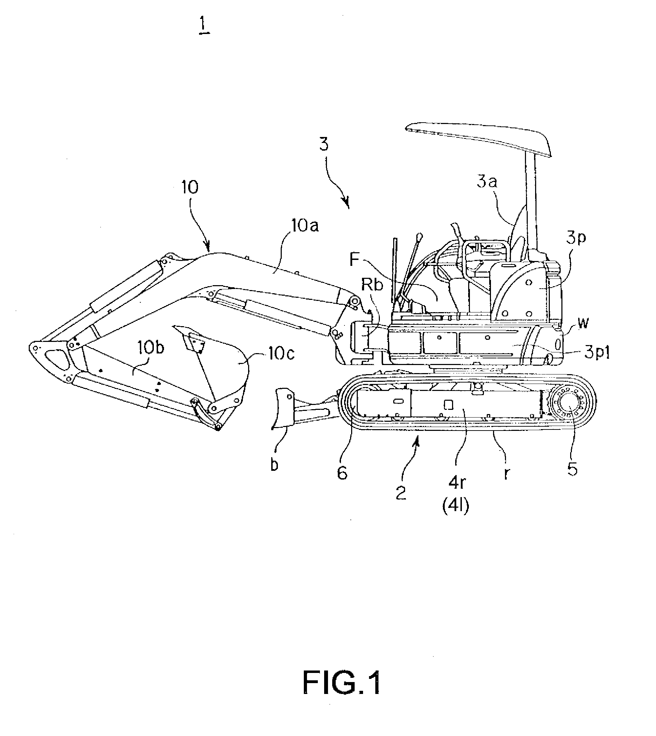

Fig 1 is a right side view of a hydraulic excavator as used in an embodiment of the present invention;
Fig. 2 is a perspective view showing the assembly of the revolving frame of the hydraulic excavator used in the embodiment of the present invention;
Fig 3 is a perspective view of the revolving frame within the revolving frame assembly of the embodiment of the present invention;
Fig 4A and Fig 4B are a cross-section showing the connection between the bottom plate and the left vertical rib within the revolving frame according to the present invention and a cross-section showing the connection between conventional metal plates;
Fig 5 is a right side view showing a conventional backhoe; and
Fig 6 is a perspective view showing an exploded illustration of the revolving frame of a conventional backhoe

### DETAILED DESCRIPTION OF THE INVENTION

An explanation follows below of an embodiment of the present invention, having reference to the figures attached

A hydraulic excavator (construction machine) 1 relating to an embodiment of the present invention comprises an undercarriage 2 equipped with a track r for movement, and an upper structure 3 rotatably mounted on top of the undercarriage 2, in which the operator sits and controls operations

The undercarriage 2 has driver wheels 5 and follower wheels 6 installed on the both ends of the track frames 4r and 4I, the track r is wound between the driver wheel 5 and the follower wheel 6.

At the front of the undercarriage 2 a blade b, used for re-burying earth dug up by the bucket 10c, is arranged in such a way as to be free to move in order to carry out its designated functions.

The upper structure 3 is provided with an operator's seat 3a on top of which the operator sits to control operations; in front of this the work equipment 10, having boom 10a and an arm 10b driven by oil pressure, and a bucket 10c mounted onto the tip of the arm 10b for use in excavation, is supported on an axle so as to be able to move up and down, and is also supported so as to be able to revolve in a horizontal direction around a support axle (not shown) provided perpendicularly on the boom fitting (work equipment support) Rb

Because of this structure, within the hydraulic excavator 1, the workload brought about by the bucket 10c through excavation work by the bucket 10c of the work equipment 10 is transmitted via the arm 10b and the boom 10a to the boom fitting Rb that supports the work equipment 10, and various loads or a large load are applied to the boom fitting Rb.

In order to balance the workload brought to bear on the work equipment 10 at the front of the structure, a counterweight w is provided in the back of the upper structure 3

The hydraulic excavator 1 constituted as described above is moved by starting the drive-source engine, converting the energy into oil pressure by a hydraulic pump, driving the hydraulic motor to transmit the drive force to the driver wheel 5, and rotating the driver wheel 5 to cause the track r to rotate Also, various kinds of work are carried out with the use of the bucket 10c and the blade b

An engine is stored inside the outer panel 3p below the operator's seat 3a within the upper structure 3, while the oil-pressure valves, the revolving motor that revolves the upper structure 3 in relation to the undercarriage 2, and the pipes are stored inside the lower outer panel 3p1 below the floor F of the body of the machine

The fuel tank, the operation oil tank, and the battery, as well as a radiator and fan for cooling the engine are stored inside the outer panel 3p on the left from the front of the operator's seat 3a on the floor F of the upper structure 3

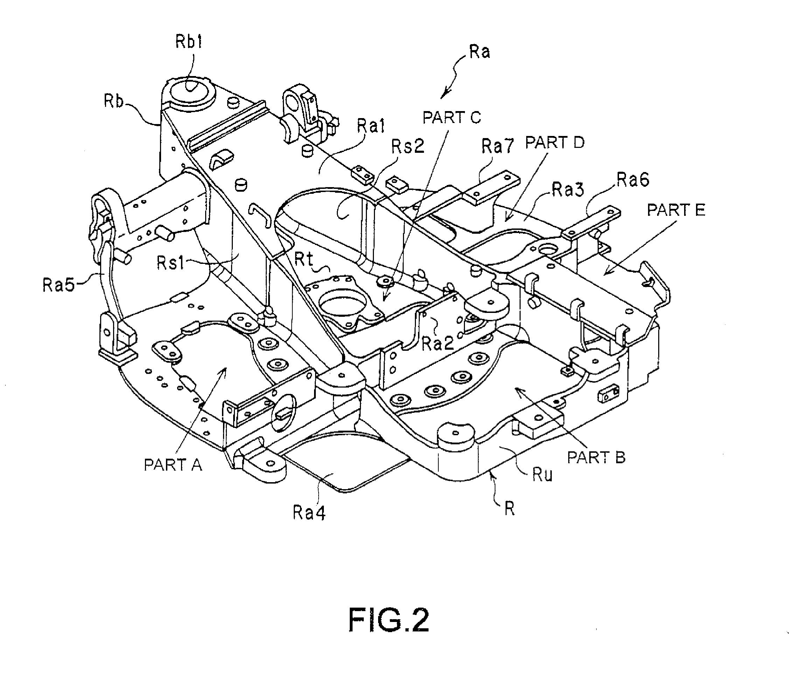

The upper structure 3 has the revolving frame assembly (frame assembly) Ra shown in Fig 2 as its base, inside the lower outer panel 3p1

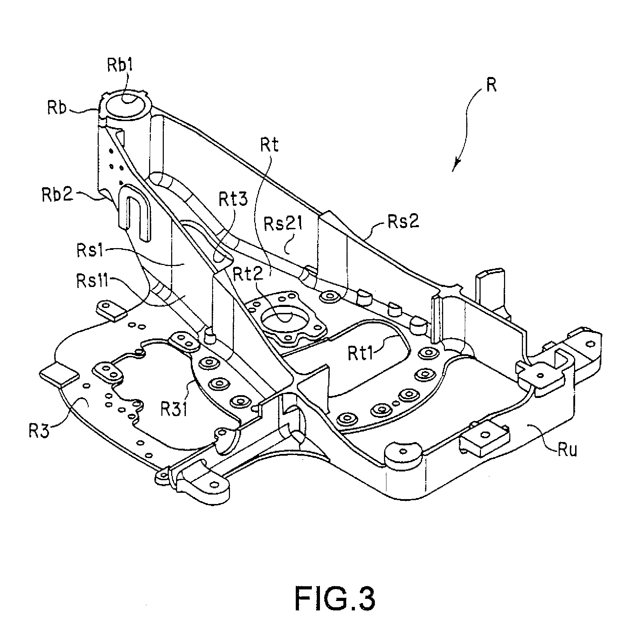

The revolving frame assembly Ra is produced by welding a plurality of steel plate parts of certain shapes to the revolving frame R shown in Fig 3

The revolving frame R is uniformly shaped in a cast using cast steel; at the front is the boom fitting Rb, which has an opening Rb1 running through it through which an axle passes vertically on which the work equipment 10 is supported so as to be rotatable in a horizontal direction

The revolving frame R is constructed so as to bear a certain weight-load, since in addition to the various workloads transmitted by the work equipment 10 to the boom fitting Rb on which the work equipment 10 is supported, the revolving frame R as a whole also receives the weight of the upper structure 3 itself

On the revolving frame R, the right vertical rib Rs1 and the left vertical rib Rs2 extend From the boom fitting Rb, the distance therebetween widening as they approach the rear to form a roughly triangular shape when viewed from above; the rear vertical rib Ru is arranged so as to adjoin the back ends of the right vertical rib Rs1 and the left vertical rib Rs2

In addition, the bottom plate Rt forms the lower face of the revolving frame R, extending inwards to adjoin the bottom edge Rb2 of the boom titling Rb, the bottom edge Rs1 of the right vertical rib Rs1, and the bottom edge Rs21 of the left vertical rib Rs2. The bottom plate Rt is provided with three holes Rt1 , Rt2, and Rt3, through which a swivel joint may be passed

The aforementioned parts―the boom fitting Rb, the right vertical rib Rs1, the left vertical rib Rs2, the rear vertical rib Ru, and the bottom plate Rt―are the chief parts of the revolving frame that act to ensure the necessary weight-load capacity.

A valve mounting plate R3 is formed on the outer face of the bottom edge Rs1 1 of the right vertical rib Rs1, facing outwards and having an opening R31

Because it is made uniform in a cast, the structure of the revolving frame R described above benefits from the freedom of design that is the characteristic of cast production As can be seen in Fig 4A, which shows a cross-section of the connecting part between the bottom plate Rt and the left vertical rib Rs2, for example, the R portion is formed without any sharp groove in the connecting part, and without any sharp corners Because of this, stress concentration is prevented in advance, and the weight-load capacity is improved.

In the method of manufacture with conventional sheet metal, on the other hand, as shown in Fig 4B, a sharp groove is formed in the connecting part between part b1 and part b2 in order for the parts b1 and b2 to be joined together, by welding y As a result, it is easy for stress concentration to occur.

Also, the revolving frame R is formed so as to be thick in places to which a heavy weight will be applied and where greater strength is required, while it is thin in places where no particular strength is necessary In this way an optimum thickness may be selected for all parts of the structure

Thus, within the revolving frame assembly Ra, the revolving frame R that is the main part to which heavy loads will be applied is a light and high-strength structure

The upper plate Ra1 is joined to the revolving frame R as shown in Fig 2 by welding it to the upper edges of the boom fitting Rb, the right vertical rib Rs1, and the left vertical rib Rs2

Welding on the upper plate Ra1 means that the upper edges of the right vertical rib Rs1 and the left vertical rib Rs2 are supported; in addition to this, because the lower edges of the right vertical rib Rs1 and the left vertical rib Rs2 are connected to the bottom plate Rt, a four-sided box shape is formed by the upper plate Ra1, the right vertical rib Rs1, the left vertical plate Rs2, and the bottom plate Rt, with the components all supporting each other, forming a high-strength structure

A partition plate Ra2 is also welded to the revolving frame R to prevent conduction of heat from the engine, as well as a tank mounting plate Ra3 onto which the fuel tank and operation oil tank are mounted; other sheet metal parts including parts Ra4, Ra5 are also welded into position

Thus, thin sheet metal parts are welded into place in parts of the revolving frame assembly Ra such as Ra2, Ra3, Ra4, and Ra5 where no particular strength is required or which it might be difficult for the casting material to reach inside a cast

Within the revolving frame assembly Ra made in this way, as shown in Fig 2, the valves are provided in part A, an engine is provided in part B, the rotation motor, pipes and so on are provided in part C, the fuel tank and operation oil tank are provided in part D, and the battery, radiator and so on are provided in part E

According to the above structure, the revolving frame R that is the main part of the revolving frame assembly Ra that needs to be particularly strong is uniformly formed in a cast, using the freedom of shape inherent in cast metal production to give each part its ideal thickness, while at the same time forming the R portions in the grooves and corners

Because of this it is possible to avoid stress concentration and to ensure the required strength, as well as to improve the mechanical reliability

Also, using cast steel to produce the revolving frame R in a cast keeps costs low..

In addition, because suitable thin sheet metal parts are used for those parts of the revolving frame assembly Ra where strength is not required, it is possible to reduce the weight of the structure

By forming the main part of the revolving frame assembly Ra as a single body in a cast reduces the number of parts and also means that less welding work is necessary since there are fewer places where welding is needed, thus helping to reduce the cost of production

It should be noted that although cast steel was used to make the revolving frame R in the embodiment described above, the material used is not lilnited to cast steel, and any other weldable material may also be used

Likewise, although the structure of the embodiment in the example above was such that the boom fitting Rb, the right vertical rib Rs1, the left vertical rib Rs2, the rear vertical rib Ru, and the bottom plate Rt were formed integrally in a cast, it is also possible to form the boom fitting Rb, the right vertical rib Rs1, the left vertical rib Rs2, and the bottom plate Rt integrally in a cast and to make the rear vertical rib Ru from sheet metal and attach it by welding

In this case too, the high strength of the parts formed integrally makes it possible to obtain a structure having the requisite weight-load capacity

Also, in the example above, the right vertical rib Rs1, the left vertical rib Rs2, and the rear vertical rib Ru were described as being arranged so as to stand up in their positions However, the shape and position of the right vertical rib Rs1, the left vertical rib Rs2, and the rear vertical rib Ru is not limited to that of the present embodiment, and each rib might also be installed so as to incline in a perpendicular direction, or with secondary reinforcing ribs installed horizontally, for example.

Likewise, the shape of the boom fitting Rb is not limited to that of the present embodiment, so long as it is so structured as to movably support the work equipment 10

It goes without saying that although a hydraulic excavator was used as an example of a construction machine in the embodiment described above, the present invention may be effectively applied using many other kinds of construction machine besides hydraulic excavators having a structure similar to that described above

The present invention may be effectively applied using a crawler dump truck, a bulldozer, or other agricultural machinery besides a hydraulic excavator, for example

## Claims

1. A construction machine comprising an undercarriage, an upper structure rotatably mounted on a top of the undercarriage, and a work equipment movably supported at a front of the upper structure, wherein within a frame assembly that forms a base of the upper structure, at least following components are produced by casting a weldable material; a work equipment support that supports the work equipment, a right vertical rib and a left vertical rib, a distance therebetween widening gradually as they extend backwards from the work equipment support; a bottom plate that extends towards inside, adjoining bottom edges of the work equipment support, the right vertical rib and the left vertical rib

2. The construction machine according to Claim 1, wherein within the frame assembly a rear vertical rib that adjoins back edges of the right vertical rib and the left vertical rib is produced by casting together with the work equipment support, the right vertical rib, the left vertical rib, and the bottom plate

3. The construction machine according to Claim 1, wherein the material used in the casting is cast steel

4. The construction machine according to Claim 2, wherein the material used in the casting is cast steel
